Europäisches Patentamt

European Patent Office

Office européen des brevets

(19)

(11) Veröffentlichungsnummer: **0 239 822**
**A2**

# (12) EUROPÄISCHE PATENTANMELDUNG

(21) Anmeldenummer: 87103061.5

(22) Anmeldetag: 04.03.87

(51) Int. Cl.⁴: **F24H 1/00 , A61C 17/00**

(30) Priorität: 04.04.86 DE 3611231

(43) Veröffentlichungstag der Anmeldung:
07.10.87 Patentblatt 87/41

(84) Benannte Vertragsstaaten:
AT BE CH DE ES FR GB IT LI LU NL

(71) Anmelder: **Degussa Aktiengesellschaft**
**Weissfrauenstrasse 9**
**D-6000 Frankfurt am Main 1(DE)**

(72) Erfinder: **Oelgeschläger, Manfred**
**Hunteburger Strasse 41**
**D-4508 Bohmte(DE)**
Erfinder: **Reitel, Klaus-Peter**
**Rabber Kirchweg 61**
**D 4515 Bad Essen 1(DE)**

(54) Gerät zur Erzeugung von Dampf und Heisswasser.

(57) Gerät zur Erzeugung von Dampf und Heißwasser, insbesondere für zahntechnische Zwecke, bei dem der beheizte, mit Wasser befüllbare Druckkessel auf einem Balken befestigt ist, der an der Gehäusewandung drehbar gelagert ist und durch eine Zugfeder in einer waagerechten Lage gehalten wird. Der Balken trägt ein Betätigungselement, das beim Heben und Senken des Balkens mit zwei Schaltern in Kontakt tritt, die das Wasserzuführungsventil und die Heizung betätigen.

EP 0 239 822 A2

## Gerät zur Erzeugung von Dampf und Heißwasser

Die Erfindung betrifft ein Gerät zur Erzeugung von Dampf und Heißwasser, insbesondere für zahntechnische Zwecke, bestehend aus einem in einem Gehäuse angeordneten, elektrisch beheizten, mit Wasser befüllbaren Druckkessel, an den Leitungen für die Wasserzufuhr und die Dampf- bzw. Heißwasserentnahme angebracht sind, mechanischen und elektrischen Regeleinrichtungen.

Vor allem zur Säuberung und Abreinigung verschmutzter Modelle werden in zahntechnischen Labors Dampf und Heißwasser benötigt, die in entsprechenden Geräten erzeugt werden. Solche Geräte bestehen im allgemeinen aus einem elektrisch beheizten Druckkessel zum Erhitzen von Wasser und Herstellung von Dampf und einer Entnahmevorrichtung für den Dampf und das Heißwasser.

Aus dem DE-GM 79 00 605 ist ein Gerät zur Erzeugung von Dampf und Heißwasser für zahntechnische Zwecke bekannt, das aus einem elektrisch beheizten, mit Dampf und Heißwasser gefüllten Druckkessel, an den Leitungen für die Dampf-und Heißwasserentnahme angeschlossen sind, und mechanischen und elektrischen Regeleinrichtungen besteht. Die Wasserzufuhr erfolgt über einen zusätzlichen Wasserspeicher, sobald entsprechende Meßsonden einen bestimmten Wasserstand im Druckkessel anzeigen, wobei diese Regelung über elektronische Bausteine abläuft.

Dieses Gerät hat den Nachteil, daß mit enthärtetem Wasser gearbeitet werden muß, da bei kalkhaltigem Wasser die Meßsonden relativ rasch unbrauchbar werden. Auch sind bei unsachgemäßer Anwendung des Gerätes die elektronischen Bauteile störanfällig.

Es war daher Aufgabe der vorliegenden Erfindung, ein Gerät zur Erzeugung von Dampf und Heißwasser, insbesondere für zahntechnische Zwecke zu entwickeln, bestehend aus einem in einem Gehäuse angeordneten, elektrisch beheizten, mit Wasser befüllbaren Druckkessel, an den Leitungen für die Wasserzufuhr und die Dampf- bzw. Heißwasserentnahme angebracht sind, mechanischen und elektrischen Regeleinrichtungen, das auch mit kalkhaltigem Wasser betrieben werden kann und wenig störanfällig ist.

Diese Aufgabe wird erfindungsgemäß dadurch gelöst, daß der Druckkessel auf einem Balken befestigt ist, dessen eine Ende an einer seitlichen Gehäusewandung drehbar gelagert ist und der über eine an der oberen Gehäusewandung angebrachten Zugfeder in einer im wesentlichen waagerechten Lage gehalten wird, und daß der Balken ein Betätigungselement trägt, das bei einer Auf- und Abbewegung des Balkens mit zwei räumlich getrennten, am Gehäuse befestigten Schaltern zum Öffnen und Schließen eines Ventils der Wasserzuführleitung in Kontakt tritt.

Dieses Gerät benötigt zur Füllstandsmessung im Druckkessel keine empfindlichen Sonden, sondern der Füllstand des Wassers im Druckkessel wird durch die Lage des Balkens bestimmt, indem die Zugfeder, an der der Balken befestigt ist, je nach Gewicht des Druck kessels verschieden weit gedehnt wird. Da der Balken am freien Ende ein Betätigungselement trägt, das mit zwei räumlich getrennten Schaltern in Kontakt treten kann, erfolgt das Öffnen und Schließen der Wasserzufuhr au omatisch.

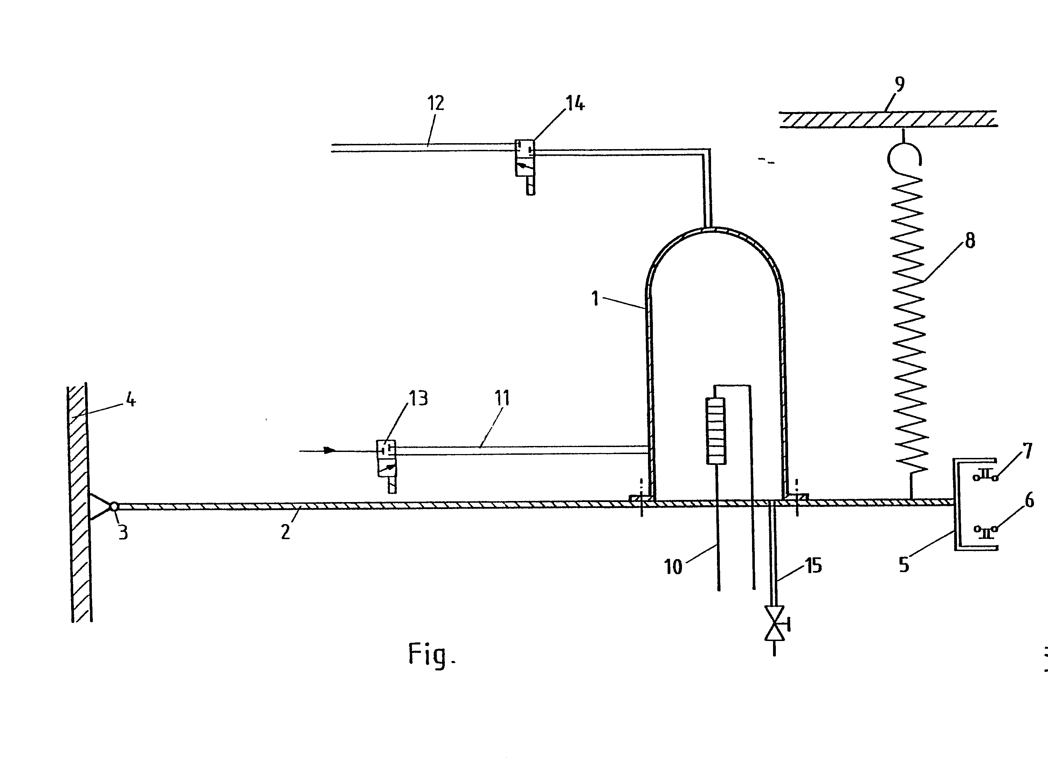

Die Abbildung zeigt schematisch einen Querschnitt durch eine beispielhafte Ausführungsform des erfindungsgemäßen Gerätes.

Der Druckkessel (1) ist auf einem Balken (2) befestigt, dessen eine Ende über ein Gelenk (3) an der seitlichen Gehäusewandung (4) drehbar gelagert ist. Das andere Ende des Balkens (2) trägt ein Betätigungselement (5), das mit zwei Schaltern (6,7) in Kontakt treten kann. Der Balken (2) ist außerdem über eine Zugfeder (8) an der oberen Gehäusewandung (9) befestigt. Der Druckkessel (1) ist mit einer Heizung (10), mit einer Wasserzuführleitung (11) und einer Dampf-bzw. Heißwasserentnahmeleitung (12) versehen, die mit Ventilen (13,14) geschlossen und geöffnet werden können. Über die Entleerungsleitung (15) kann der Druckkessel (1) entleert werden.

Der Druckkessel (1) besteht vorzugsweise aus Kupfer und bildet zusammen mit dem drehbar gelagerten Balken (2) und der Zugfeder (8) eine Waage, über die der Füllstand des Druckkessels (1) gesteuert wird. Durch Betätigung der beiden Schalter (6,7) mit dem am anderen Balkenende befestigten Betätigungselement (5) erfolgt in der oberen und unteren Endstellung der "Waage" das Befüllen und Heizen des Druckkessels (1), indem das Ventil (13) geöffnet bzw. geschlossen und die Heizung (10) ein-und ausgeschaltet wird.

Das Gerät ist technisch sehr einfach aufgebaut, daher sehr robust und wenig störanfällig. Da der Füllstand des Druckkessels nicht mit Meßsonden bestimmt werden muß, ist das Gerät auch mit kalkhaltigem Wasser zu betreiben.

**Ansprüche**

Gerät zur Erzeugung von Dampf und Heißwasser, insbesondere für zahntechnische Zwecke, bestehend aus einem in einem Gehäuse angeordneten, elektrisch beheizten, mit Wasser befüllbaren Druckkessel, an den Leitungen für die Wasserzufuhr und die Dampf-bzw. Heißwasserentnahme angebracht sind, mechanischen und elektrischen Regeleinrichtungen, dadurch gekennzeichnet, daß der Druckkessel (1) auf einem Balken (2) befestigt ist, dessen eine Ende an einer seitlichen Gehäusewandung (4) drehbar gelagert ist und der über eine an der oberen Gehäusewandung (9) angebrachten Zugfeder (8) in einer im wesentlichen waagerechten Lage gehalten wird, und daß der Balken (2) ein Betätigungselement (5) trägt, das bei einer Auf-und Abbewegung des Balkens (2) mit zwei räumlich getrennten, am Gehäuse befestigten Schaltern (6,7) zum Öffnen und Schließen eines Ventils (13) der Wasserzuführungsleitung (11) in Kontakt tritt.

Fig.

0 239 822

1/1